# EUROPEAN PATENT SPECIFICATION

(11) **EP 1 509 678 B1**
(45) Date of publication and mention of the grant of the patent: **31.08.2005**
(21) Application number: 03725414.1
(22) Date of filing: 19.05.2003
(51) Int. Cl.: E21B 47/04, G01F 23/68

(54) **LIQUID LEVEL MEASUREMENT**
FLÜSSIGKEITSSTANDMESSUNG
MESURE DU NIVEAU DES LIQUIDES

(30) Priority: 25.05.2002 GB 0212102
(43) Date of publication of application: 02.03.2005
(73) Proprietor: Butler, Arthur Robert, Suffolk IP14 6QS (GB)
(72) Inventor: Butler, Arthur Robert, Suffolk IP14 6QS (GB)
(74) Representative: McLean, Robert Andreas
(86) International application number: PCT/GB2003/002133
(87) International publication number: WO 2003/100217

(56) References cited:
- US-A- 5 483 831
- US-A- 5 874 899

## Description

### BACKGROUND

### a. Field of the Invention

The present invention relates to the measurement of liquid level, and particularly to the measurement of the water level in a river, reservoir or the borehole of a well.

### b. Related Art

There are many known ways of measuring the level of water relative to a reference level, for example with respect to the bottom of a container, or relative to a nominal or average depth. Examples include float switches and potentiometer float devices. These instruments are ideally suited to shallow tanks, owing to the limited vertical travel of the sensing elements.

US 5,483,831 discloses a liquid level measurement device comprising an elongate guide, a float, an electric battery within the float, a processor for calculating a liquid level, the float being arranged to move along the length of the guide under the influence of a changing liquid level inside a vessel and the float having a non-contact sensor powered by the battery and in communication with the processor, wherein:
a) the guide has spaced along its length a plurality of graduations that are optically visible;
b) the non-contact sensor is an optical sensor arranged to sense the optically visible graduations as the float moves along the length of the guide;
c) the processor is arranged to calculate from the sensed graduations changes in the level of the liquid inside the vessel.

It is more difficult to measure the water level within deep water or a deep container, owing to the distance a moving float must travel as water level changes. Problems also arise if the water is not clear or clean. One known device uses a compressor to blow air down a pipe immersed in the water until the pipe is clear of water. The back-pressure of the water is then measured and the level of liquid calculated from that measurement. There could, however, be problems in using this method for deep water, such as found in boreholes, because the compressor would need to be much larger in order to clear a deep air pipe. In the case of measuring the level of river water, the currents from flowing water could affect the accuracy of the measurement.

Relatively precise, but expensive devices are known that use various types of non-contact liquid level measurement, for example sonar, radar, laser and ultrasonic liquid level measurement devices. All such devices rely on there being a clear path, either in the liquid itself, or in the air above the liquid, through which acoustic or electromagnetic radiation may be passed. In addition to being expensive, such devices usually have high power consumption, and can be difficult to align in a constrained environment, for example a narrow well borehole. Many of such devices are also unsuitable for use in an environment where a sensor could be contaminated by algae growth or physically damaged, for example by contact with the wall of a narrow borehole, or in running water.

### SUMMARY OF THE INVENTION

It is an object of the present invention to provide a more convenient device and method for measuring the level of liquid, particularly the measurement of water level within a borehole.

According to the invention there is provided a liquid level measurement device, comprising an elongate sleeve, a float, an electric battery within the float, a processor for calculating a liquid level, the float being arranged to float freely inside and to move along the length of the sleeve under the influence of a changing liquid level inside the sleeve and the float having at least one non-contact sensor powered by the battery and in communication with the processor, wherein:
a) the sleeve extends around the float;
b) the sleeve has spaced along its length a plurality of graduations that are optically visible from within the sleeve;
c) the or each non-contact sensor is an optical sensor arranged to sense the optically visible graduations as the float moves along the length of the sleeve;
d) the processor is arranged to calculate from the sensed graduations changes in the level of the liquid inside the sleeve.

The invention also provides a liquid level measurement system, comprising a liquid containing container and a liquid measurement device, wherein the liquid measurement device is according to the invention and is arranged within the container to measure changes in the level of liquid within the container.

The processor may be within the float, or within a separate component such as a base station in communication with the float. Processor calculations may alternatively be divided between microprocessors in the float and in base station.

The invention may be used to measure the water level of an open body of water, for example, the tide level at an ocean marina, or the level of a moving body of water such as a river. In one embodiment of the invention the device is used as part of a liquid level measurement system, comprising a liquid containing container with the liquid measurement device being arranged within the container to measure changes in the level of liquid within the container. Although the invention may be used with large diameter containers, such as above-ground or below-ground liquid storage tanks, the invention is particularly useful with a container such as a borehole well, which may be relatively narrow, for example of the order of about 100 mm in diameter. The sleeve may have a smaller diameter, for example about 25 mm, and can then may be inserted directly into the borehole without the need for any further support or mounting.

Also according to the invention, there is provided a method of measuring liquid level in a liquid containing container using a liquid level measurement device, the liquid level measurement device being according to the invention, wherein the method comprises the steps of:
i) using one or more of the optical sensors to sense the relative movement of the float with respect to the graduations when the liquid level changes; and
ii) using the processor to calculate from the sensed movement of graduations a corresponding change of liquid level in the sleeve.

The float therefore floats within the sleeve and registers the relative movement of the float and sleeve as the level of the liquid changes. The use of a non-contact sensor, simplifies the construction and operation of the device.

The optical sensor may use one or more near-infrared light emitting diode/photodiode pairs. Such optical sensors can be pulsed for short times at a very low on/off duty cycle, which helps to conserve electrical power within the measurement unit.

In one embodiment of the invention, the float is cylindrical.

This provides the advantage that the float when inside the sleeve is free to rotate about its axis.

In its simplest form, the sleeve is tubular, and may be formed from relatively inexpensive materials, for example straight PVC tubing.

The graduations may be any mark, feature or material that can readily be detected by the non-contact sensor(s). In one embodiment of the invention, the graduations are slits through the sleeve that extend transversely to the direction of movement of the float inside the sleeve. Such slits may be readily visible to a non-contact optical sensor. The use of such slits through the sleeve is also particularly advantageous in the case where the sleeve is in a container holding the liquid. Any changes to the liquid level will immediately result in a flow of liquid through the slits from the exterior to the interior of the sleeve, therefore allowing for an automatic and rapid correlation between the level of the liquid inside the container and the level of the float floating on the liquid inside the sleeve.

The sleeve may extend along an axis, for example being cylindrical, and the float may then be free to rotate about this axis. The float may have a plurality of non-contact sensors spaced apart around the axis, the angular separation between these spaced apart sensors and the extent of each graduation around the axis being such that at least one of the non-contact sensors is able to sense each of the graduations as the float moves along the sleeve. Neighbouring graduations spaced along the length of the sleeve may then be rotated relative to one another around the sleeve axis.

### BRIEF DESCRIPTION OF THE DRAWINGS

The invention will now be described in greater detail, and by way of example only, with reference to the accompanying drawings, in which:
Figure 1 is a partial cross-section along a longitudinal axis of a liquid level measurement device according to a first embodiment of the invention, having a cylindrical tubular sleeve with graduation slits, inside of which floats a cylindrical float sensor;
Figure 2 is a partial cross section of the device of Figure 1, used to measure the depth of water within a borehole;
Figure 3 is transverse cross-section of a liquid level measurement device according to a second embodiment of the invention, having a square cross-section tubular sleeve with graduation slits inside of which floats an octagonal cross-section float sensor;
Figure 4 is a transverse cross-section of a liquid level measurement device according to a second embodiment of the invention, similar to that shown in Figure 3, but having a pair of longitudinal strips with graduations inside the sleeve;
Figure 5 is a block circuit diagram of the functioning of the float sensor of Figure 3; and
Figure 6 is a block circuit diagram of a base station for the liquid level measurement system.

### DETAILED DESCRIPTION

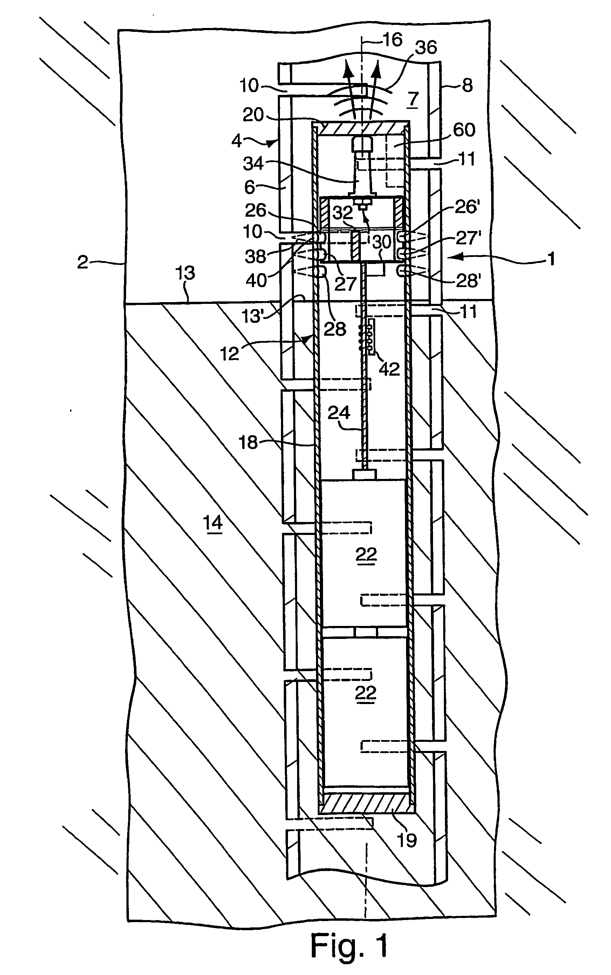

Figure 1 shows part of a liquid level measurement system 1 for an agricultural borehole 2, according to a first embodiment of the invention. The system 1 comprises a hollow tubular sleeve 4 having a cylindrical outer wall 6 with smooth inner facing and outer facing cylindrical surfaces 7,8. A number of transverse slits 10,11 are cut through the wall 6 at regularly spaced intervals.

A float sensor 12 floats within the sleeve 4, the relative vertical position between the sleeve 4 and the float sensor 12 being determined by the water level 13 of a body of water 14 within the borehole 2.

The float sensor 12 is cylindrical in shape, having a diameter sufficiently less than the inner diameter of the sleeve 4 so that the float sensor 12 can easily move vertically up or down along a longitudinal axis 16 of the sleeve 4. The sleeve 4 is therefore concentric with the float and acts as a float guide. Because the sleeve 4 is a body extending substantially fully around the float sensor 12, the sleeve 4 affords the maximum mechanical protection to the float sensor 12.

The float sensor 12 has a tubular aluminium body 18 with impermeable plastic end caps 19,20. A pair of lithium 3.6 Volt batteries 22 are housed within a lower portion of the body 18 and provide electrical power for a number of electronic and optoelectronic components, including a processor circuit board 24 three sets of at least two and preferably three non-contact infra-red sensors, two sets of which 26,27,28:26',27',28' are visible in the drawing, a sensor circuit board 30 for controlling the infra-red sensors, and a radio transmitter circuit board 32 connected to an antenna 34 for transmitting radio signals 36 upwards through one of the plastic end caps 20.

The infra-red sensors 26,27,28;26',27',28' each comprise a transmitter LED matched to a photodiode receiver. Infra-red optical radiation 38 is focused by an integral focusing lens 40 so that optical radiation 38 is directed towards the inner surface 7 of the tubular wall 6. If the focused optical radiation 38 is incident upon the inner surface 7, then a significant fraction of this will reflected or scattered and collimated by the lens 40 and hence detected by the infra-red photodiode. If, on the other hand, the optical radiation 38 is directed towards one of the slits 10,11, then there will be a relatively low level of reflected or scattered optical radiation detected by the photodiode. The infra-red sensors 26,27,28;26',27',28' each have a spacing in the vertical direction such that only one of the sensors in each set of three sensors can detect a slit 10,11 at anyone time.

Each of the slits 10,11 subtends an angle about the axis 16 of slightly more than 180°. Neighbouring slits 10,11 in the vertical direction are staggered by 180° in a symmetrical fashion. In the present example, the float sensor 12 has three sets of sensors 26,27,28;26',27',28' to provide for a certain level of redundancy in the case that the float sensor 12 begins to rotate about the vertical axis 16. It would, however, be possible to use just two sets of sensors spaced apart by 180°.

The arrangement between the slits 10,11 and the vertically spaced three sensors 26,27,28:26',27',28' is such that as the float sensor 12 moves up and down the axis 16 of the sleeve 4, the sensors will be able to register both the presence of each slit 10,11, as well as the relative direction of motion between the float sensor 12 and the sleeve 4. Each sensor 26,27,28;26',27',28' is in communication with a microprocessor 42 on the processor circuit board 24. The microprocessor 42 keeps track of the passage of the slits 10,11 and from the regular spacing of these graduations is able to calculate the vertical movement of the float sensor 12 within the sleeve 4. In order to minimise power consumption, the infra-red sensors 26,27,28;26',27',28' are pulsed at a low duty cycle. If the microprocessor 42 detects movement past one of the slits 10,11, then the microprocessor 42 activates via the transmitter circuit board 32 a radio transmission 36 from the antenna 34.

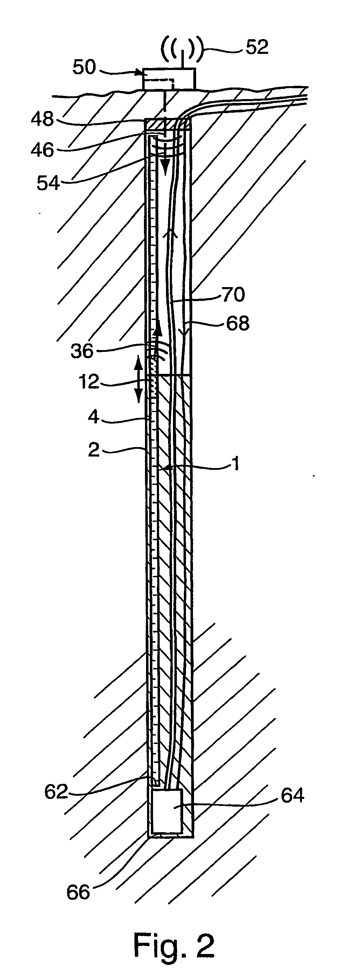

Referring now also to Figure 2, such a radio transmission 36 can be detected by a base station 50 having a receiver antenna 46 that projects in through a cap 48 at the top of the borehole 2. The base station 50 can then receive the radio signal 36 and transmit 52 this to a central monitoring station or a communications network (not shown) for a number of similarly monitored boreholes. Optionally, the base station 50 may transmit 54 to the float sensor 12 in order to communicate information to the float sensor, in particular a nominal value for initial depth for the water level 13 within the borehole 2.

The float sensor 12 is weighted down by the batteries 22, and so naturally floats with the antenna 34 in an uppermost portion of the sensor 12. In most applications, the sleeve 4 will extend essentially vertically through the body of water 14.

The transverse slits 10,11 provide the advantage of making the sleeve 4 more flexible, so that it can bend more easily to accommodate the shape of an adjacent wall, and so that it can more readily be rolled up when not in use or prior to installation.

The slits 10,11 also allow the ingress or egress of water as the water level 13 changes. For a particular number of slits 10,11, there will be a maximum rate of flow through the slits, and so the water level 13' inside the sleeve 4 may change more slowly than the water level 13 outside the sleeve. This, however, provides the advantage that the optical pulse rate from the sensors 26,27,28;26',27',28' can be set so that this does not exceed that required by the maximum expected rate of change of water level 13' inside the sleeve 4.

It will, at intervals, be necessary to retrieve the float sensor 12 from within the sleeve 4, in order to change the batteries 22. One way in which this can be done is by providing a magnet 60 in an upper portion of the float sensor 12. Such a magnet 60 would, however, need to be positioned so that this did not interfere with radio transmissions 36 from the antenna 34.

Another way in which the float sensor 12 can be retrieved, is if the sleeve 4 has an end stop 62, such as a sealed or partially sealed end to the sleeve 4. The sleeve can have a sufficient length so that it is readily accessible near the top of the borehole 2. As the sleeve 4 is retrieved from the borehole 2, water 14 will flow out of the sleeve 4 with the level of the float sensor 12 dropping until it comes against the end stop 62. The float sensor 12 can then be retrieved from the sleeve 4 once this has been fully removed from the borehole 2. The lower end cap 19 may be provided with threads (not shown) so that this can readily be removed in order to change the batteries 22.

A particular advantage of the end stop 62 is that the float sensor 12 can be positioned at this end of the sleeve 4 when this is initially inserted into the borehole 2. As the sleeve 4 is fully inserted into borehole 2, the float sensor 12 will rise up the sleeve 4 as water enters the sleeve 4. The float sensor 12 can then be calibrated initially to a reference depth equal to that of the end stop 62 when this is fully inserted in the borehole 2. The processor 42 then is initially calibrated to the true depth of the water level 13 within the borehole 2.

The liquid level measurement system 1 need not interfere with other devices commonly used with borehole, for example a pump unit 64 at the base 66 of the borehole 2, or an electrical power line 68 or water supply line 70 between the pump unit 64 and end cap 48 of the borehole 2.

The sleeve 4 can inexpensively be formed from 3 mm thick PVC tubing, having an internal diameter of 25 mm. The float sensor 12 can then have an external diameter of about 20 mm, and a length of about 200 mm. The vertical spacing between neighbouring slits 10, 11 may be of the order of about 20 mm. Such a spacing allows the float sensor 12 to monitor the water level 13 within the borehole 2 to a high degree of accuracy compared with many other water level measurement systems. A particular advantage of the invention is that the sleeve can be manufactured relatively inexpensively, and in long continuous lengths. In a typical borehole, the sleeve may be between about 10 m to 250 m long, although the invention is applicable to lengths greater than or shorter than these distances.

It should be noted that the tasks performed by the processor 42 could be split amongst one or more electronic processing devices, either within the float sensor 12 or split between the float sensor 12 and base station 50. In this sense, the base station 50 may comprise part of the liquid level measurement device 1. However, because radio transmissions 36 from the float sensor 12 to the base station 50 consume a relatively large amount of electrical power, it is preferred if most or all of the processing is done within the float sensor 12, with changes in water level 13 being communicated to the base station 50 when and as necessary.

In some applications, particularly the measurement of the level of storage tanks or river level measurement, the liquid level measurement system may be in communication with a network of similar sensors. In some cases, the base station may be at some distance from the sleeve, for example on a river bank.

The liquid level measurement systems described above are relatively inexpensive to construct, and are convenient to use in many situations, particularly where there is limited space or availability of mains electric power, such as with agricultural boreholes. The invention may also be useful in other remote locations, for example the measurement of water levels at a river or a marina. In some cases, it may be desirable to limit or to filter the flow of liquid into the sleeve. In such cases, the graduations may be reflected or painted stripes on the sleeve for example on an outer surface of an optically transparent sleeve. A single liquid entrance may then be provided at one point on the sleeve so that the liquid level inside the sleeve remains in communication with that on the outside of the sleeve.

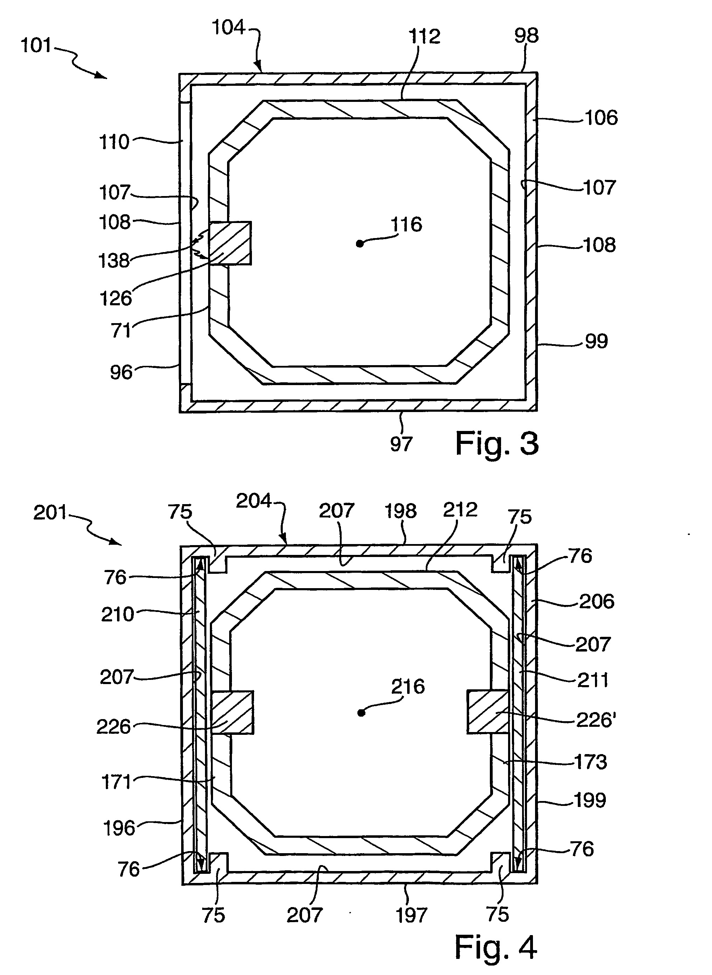

Figure 3 shows a transverse cross-section of a liquid level measurement device 101 according to a second embodiment of the invention, in which features corresponding to the first embodiment 1 are indicated by reference numerals incremented by 100. The device 101 is similar in function and operation to the first embodiment 1, but has a square cross-section tubular sleeve 106 having four sides 96,97,98,99, just one of which 96 has a plurality of transversely extending graduation slits 110 spaced longitudinally along the length of the side 96.

A float sensor 112 floats within the sleeve 104. At least 2 non-contact infra-red sensors 126 are longitudinally spaced apart in the centre of one side 71 of the float sensor 112. Therefore, as the float sensor 112 moves under the action of a changing liquid level, reflected or scattered optical radiation 138 is used to detect the passage of the series of slits 110. The view of Figure 3 is in a plane perpendicular to an axis 116 of the sleeve 104 and float sensor 112

The sleeve 104 is formed from 38 mm square section plastic tube. The thickness of the sleeve wall 106 may be between about 1 mm to3 mm. The advantage of using a square section sleeve 104 is that the float sensor 112 can therefore also be of essentially square section so that the float 112 no longer is able to rotate in the sleeve 104. In this example, the float sensor is of roughly octagonal cross-section. Therefore, a single column of optical sensors 126 may be used, rather than the three columns used in the first embodiment. If one side 96 of the sleeve 104 is being used for graduations of a first spacing, for example 10 mm, then another side 97,98,99 may have graduations of a finer spacing, for example 2 mm to 3 mm. In this case, the float sensor 112 would have another set of optical sensors 126 arranged opposite the other face 72. However, in many applications it would be better to have a reduced number of optical sensors 126 in order to reduce the battery load and also to increase the strength of the sleeve.

Figure 4 shows a third embodiment of a liquid level measurement system 201, similar to the second embodiment 101, in which features similar to those of the second embodiment are indicated by reference numerals incremented by 100. The third embodiment 201 differs from the second embodiment 101 in having a square sleeve 204 with no slits 110 or other such apertures formed in the wall 206 of the sleeve 204. In place of slits through the sleeve 204, the sleeve has a pair of separate graduation strips 210,211 held inside the sleeve 204 against opposite parallel inner faces 207 of the sleeve 204 by means of opposite inwardly projecting rails 75 on the inner surface 207 of the sleeve 204. The rails 75 together with the opposite sides 196,199, form two opposite pairs of channels 76, which hold the opposite graduation strips 210,211 in place against the inner wall 207 of the sleeve 204.

The graduation strips 210,211 may be painted, textured, or cut through with longitudinally spaced slits (not shown) in order to present optically visible graduations to oppositely directed columns of optical sensors 226,226' arranged in opposite sides 171,173 of the octagonal cross-section float sensor 212.

In either of the second or third embodiments 101,201, self calibration can be built into the device by forming further calibration graduations at known distances, for example every 1 m along any face of the sleeve that is not being used for fine measurement purposes. Such additional calibration graduations could be detected by using a single optical sensor (not shown) in the float sensor 112,212. Such an additional optical sensor could conveniently be provided on any of the sides of the float sensor 112,212 not being used to detect finer graduations.

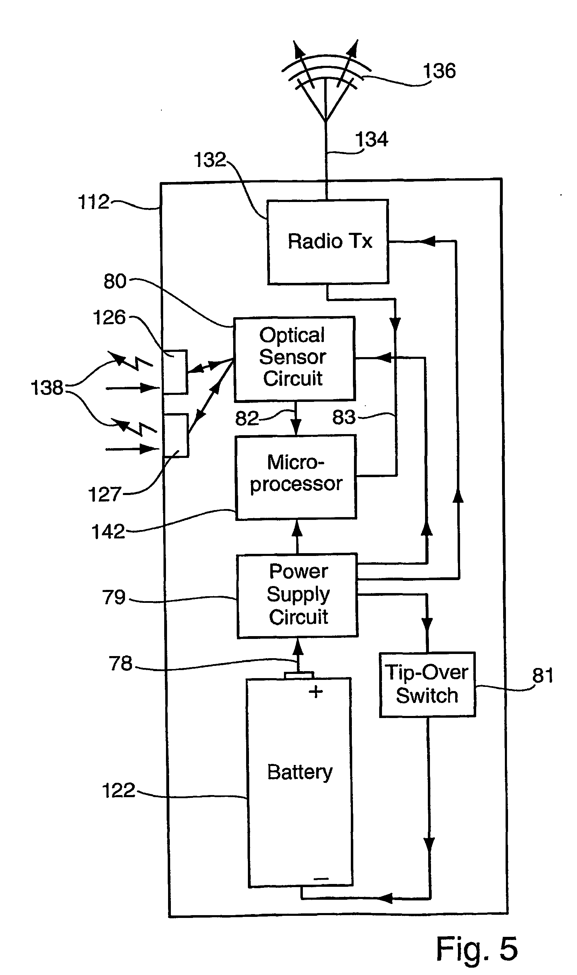

Figure 5 shows a block circuit diagram of the functioning of float sensor 112 of Figure 3. The functioning of the float sensor 212 of the third embodiment 201 is similar, and so will not be separately described.

The float sensor 212 has a 3.6 volt battery 122 provided in a lower portion of the float sensor 112, which provides physical ballast to the float sensor 112 so that this naturally floats up right within the sleeve 104. The battery 122 provides electrical power 78 to a power supply circuit 79 which converts the battery voltages to voltages required by the other electrical components within the float sensor 112. These other electrical components include a microprocessor 142, an optical sensor circuit 80 which drives the vertically stacked optical sensors 126,127, and a radio transmitter circuit 132.

The float sensor 112 includes additionally a tip-over switch circuit 81, the function of which is to isolate the battery 122 in the event that the float sensor 112 is inverted. This provides a convenient way of conserving battery power when the float sensor 112 is not in use.

In order to conserve electrical power, the optical sensor circuit 80 pulses the optical sensors 126, 127 to produce short bursts of infra-red light 138. The optical sensor circuit 80 operates under the control 82 of the microprocessor 142 which also receives input from the optical sensor circuit as the optical sensors 126, 127 sense the vertical passage of graduations. The microprocessor 142 then sends information 83 to the radio transmitter circuit 132, which transmits 136 this information from an antenna 134.

The complete float system 112 is enclosed in a waterproof moulding with a screw fastened bottom (not shown) to allow the battery 122 to be changed.

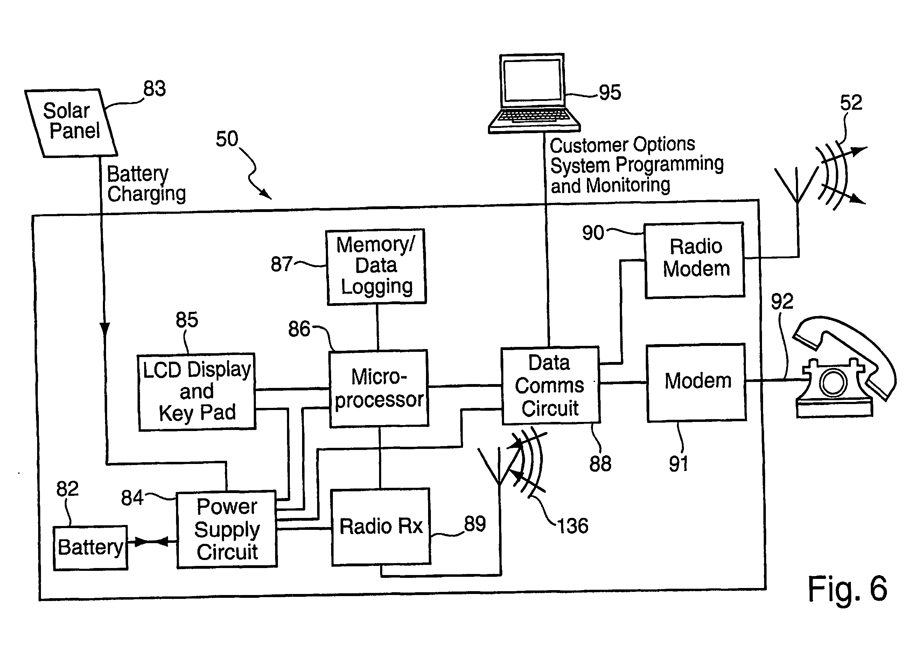

As with the first embodiment 1, the sleeves 104,204 and float sensors 112,212 of the second and third embodiments 101,201 may be used to measure water level in a borehole, reservoir or a river. The system will normally include the base station 50, shown in more detail in Figure 6. The base station 50 is preferably powered by a lead-acid battery 82 which is recharged by a solar panel 83 via a power supply circuit 84. The power supply circuit 84 also regulates the output from the battery 82 and supplies a regulated voltage to other electrical components, including an LCD display and keypad 85 for manual control of the base station 50 and float sensor 12,112,212, a microprocessor 86, a memory/data logging section 87, a data communications circuit 88 to interface to a computer 95 a radio receiver circuit 89, a radio transmitter modem circuit 90 and a modem 91 for a communication over a telephone line 92.

The radio receiver circuit 89 collects the data transmitted 136 from the float sensor 12,112,212 and feeds this to a microprocessor 86. In order to conserve power, the microprocessor 42, 142 in the float sensor may not calculate the depth of the liquid. Instead, the microprocessor 86 in the base station 50 counts pulses received from the float sensor 12, 112, 212, and calculates from this the depth of the liquid. The changing depth of the liquid may then be stored in the memory 87 and/or transmitted externally via the radio modem 90 or telephone modem 91.

User input can be provided via the computer 95 and data communications circuit 88. For example, information such as offsets may be entered into calculations performed within the base station 50. In addition low or high alarm levels may be manually or automatically set to provide an alert for predetermined low or high liquid levels. Such data may be entered by the user, or programmed and downloaded via either of the modems 90,91 into flash memory.

The invention therefore provides a number of convenient and economical ways for measuring or monitoring the level of still or running water, for example in a well, reservoir or river.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention, as defined by the appended claims.

## Claims

1. A liquid level measurement device (1,101,201), comprising an elongate sleeve (4,104,204), a float (12,112,212), an electric battery (22,122) within the float (12,112,212), a processor (42,86,142) for calculating a liquid level (13), the float (12,112,212) being arranged to float freely inside and to move along the length of the sleeve (4,104,204) under the influence of a changing liquid level (13') inside the sleeve (4,104,204) and the float (12,112,212) having at least one non-contact sensor (26,27,28,26',27',28',126,127,226,226') powered by the battery (22,122) and in communication with the processor (42,86,142), wherein:
a) the sleeve (4,104,204) extends around the float (12,112,212);
b) the sleeve (4,104,204) has spaced along its length a plurality of graduations (10,11,110) that are optically visible from within the sleeve (4,104,204);
c) the or each non-contact sensor is an optical sensor (26,27,28,26',27',28',126,127,226,226') arranged to sense the optically visible graduations (10,11,110) as the float (12,112,212) moves along the length of the sleeve (4,104,204);
d) the processor (42,86,142) is arranged to calculate from the sensed graduations (10,11,110) changes in the level of the liquid inside the sleeve (4,104,204).

2. A liquid level measurement device (1) as claimed in Claim 1, in which the float (12) is cylindrical.

3. A liquid level measurement device (1) as claimed in Claim 2, in which the sleeve (4) has a cylindrical inner surface (7) which is concentric with the float (12).

4. A liquid level measurement device (1,101,201) as claimed in any preceding claim, in which the sleeve (4,104,204) has towards one end a stop (62) to prevent the float (12,112,212) from exiting the sleeve (4,104,204).

5. A liquid level measurement device (1,101,201) as claimed in any preceding claim, in which the sleeve (4,104,204) is tubular.

6. A liquid level measurement device (1,101) as claimed in any preceding claim, in which the graduations are slits (10,11,110) through the sleeve (4,104) that extend transversely to the direction of movement of the float (12,112) inside the sleeve (4,104).

7. A liquid level measurement device (1) as claimed in any preceding claim, in which the sleeve (4) extends along an axis (16), and the float (12) when in the sleeve (4) is free to rotate about the axis (16), wherein the float (12) has a plurality of optical sensors (26,27,28;26',27',28') spaced apart around the axis, the angular separation between the spaced apart sensors (26,27,28;26',27',28') and the extent of each graduation (10,11) around the axis (16) being such that at least one of the optical sensors is able to sense each of the graduations (10,11) as the float (12) moves along the sleeve (4).

8. A liquid level measurement device (1) as claimed in Claim 7, in which neighbouring graduations (10,11) spaced along the length of the sleeve (4) are rotated relative to one another around the sleeve axis (16).

9. A liquid level measurement device (1,201) as claimed in Claim 8, in which there is a pair of optical sensors (26,27,28,126;26',27',28',126') on opposite sides of the float axis (16,216), and neighbouring graduations (10,11) are rotated 180° relative to one another.

10. A liquid level measurement device (1) as claimed in Claim 9, in which the sleeve (4) has a cylindrical wall (6), and each of the graduations (10,11) extends through an arc of the wall extending at least 180°.

11. A liquid level measurement device (101,201) as claimed in any of Claims 1 to 6, in which the sleeve (104,204) extends along an axis (116,216) and has a non-circular inner diameter, the fit between the float (112,212) and the sleeve (104,204) being such that the float (112,212) when in the sleeve (104,204) is not free to rotate about the axis (216,216).

12. A liquid level measurement device (101,201) as claimed in Claim 11, in which the sleeve (104,204) has a plurality of sides (96-99;196-199) around the axis (116,216), and the graduations (110) are provided along the length of at least one of said sides (96;196,199).

13. A liquid level measurement device (101,201) as claimed in Claim 12, in which the sleeve (104,204) is square or rectangular in cross-section through the axis (116,216).

14. A liquid level measurement device (101,201) as claimed in any of Claims 11 to 13, in which the float (112,212) has a plurality of sides (96-99,196-199) around the axis (116,216), and at least one of the optical sensors (126,226,226') is provided on at least one (96,196,199) of said sides.

15. A liquid level measurement device (201) as claimed in Claim 14, in which the float (212) has at least one of the optical sensors (226,226') on opposite sides (196,199) of the float (212).

16. A liquid level measurement device (1,101,201) as claimed in any preceding claim, in which the or each optical sensor comprises at least two optical sensing devices (26,27,28,26',27',28',126,127,226,226') spaced longitudinally along the float (12,112,212), each of the sensing devices being capable of sensing the presence of the graduations (10,11,110) so that the processor (42,86,142) can calculate from the sensed graduations (10,11,110) the direction of motion of the float (12,112,212) relative to the graduations (10,11,110).

17. A liquid level measurement device (1,101,201) as claimed in Claim 16, in which the optical sensing devices (26,27,28,26',27',28',126,127,226,226') are arranged in a row, the row extending in a plane along which the sleeve (4,104,204) extends.

18. A liquid level measurement device (1,101,201) as claimed in any preceding claim, in which the battery (22,122) is positioned in a lower portion of the float (12,112,212), and the or each optical sensor is positioned in an upper portion of the float (12,112,212).

19. A liquid level measurement device (1,101,201) as claimed in any preceding claim, comprising a base station with a radio receiver, the float (12,112,212) having a radio transmitter in radio communication with the receiver so that liquid level data are communicated from the float (12,112,212) to the base station.

20. A liquid level measurement device (1,101,201) as claimed in any preceding claim, in which the processor (42,142) is housed within the float (12,112,212).

21. A liquid level measurement device (101,201) as claimed in any preceding claim, in which the float (112,212) includes a tip-over switch (81) that switches electrical power from the battery (82) between on and off when the float (112,212) is inverted.

22. A liquid level measurement system, comprising a body of liquid (14) and a liquid measurement device (1,101,201), wherein the liquid measurement device (1,101,201) is as claimed in any preceding claim, and is arranged to measure changes in the level (13) of the body of liquid (14).

23. A liquid level measurement system as claimed in Claim 22, in which the body of liquid (14) is in a borehole (2).

24. A liquid level measurement system as claimed in Claim 23 or Claim 23, in which the sleeve (4,104,204) is between 10 m and 250 m long.

25. A method of measuring liquid level (13) in a liquid containing container (2) using a liquid level measurement device (1,101,201), the liquid level measurement device (1,101,201) being as claimed in any of Claims 1 to 21, wherein the method comprises the steps of:
i) using one or more of the optical sensors (26,27,28,26',27',28',126,127,226,226') to sense the relative movement of the float (12,112,212) with respect to the graduations (10,11,110) when the liquid level (13) changes; and
ii) using the processor (42,86,142) to calculate from the sensed movement of graduations (10,11,110) a corresponding change of liquid level (13') in the sleeve (4,104,204).

26. A method as claimed in Claim 25, in which the processor (42,86,142) calculates the change of liquid level (13) relative to an initial known liquid level.

## Patentansprüche

1. Flüssigkeitsstandmessvorrichtung (1, 101, 201) mit einer länglichen Hülse (4, 104, 204), einem Schwimmer (12, 112, 212), einer elektrischen Batterie (22, 122) im Schwimmer (12, 112, 212), einem Prozessor (42, 86, 142) zur Berechnung eines Flüssigkeitsstands (13), wobei der Schwimmer (12, 112, 212) so angeordnet ist, dass er unter dem Einfluss eines sich ändernden Flüssigkeitsstands (13') innerhalb der Hülse (4, 104, 204) frei in Letzterer schwimmt und sich entlang der Länge der Hülse (4, 104, 204) bewegt, wobei der Schwimmer (12, 112, 212) mindestens einen kontaktlosen Sensor (26, 27, 28, 26', 27', 28', 126, 127, 226, 226') aufweist, der von der Batterie (22, 122) angetrieben wird und mit dem Prozessor (42, 86, 142) verbunden ist, wobei:
a) die Hülse (4, 104, 204) sich um den Schwimmer (12, 112, 212) herum erstreckt;
b) die Hülse (4, 104, 204) mehrere entlang ihrer Länge beabstandete Graduierungen (10, 11, 110) aufweist, die von innerhalb der Hülse (4, 104, 204) optisch sichtbar sind;
c) der oder jeder kontaktlose Sensor ein optischer Sensor (26, 27, 28, 26', 27', 28', 126, 127, 226, 226') ist, der zur Erfassung der optisch sichtbaren Graduierungen (10, 11, 110), wenn sich der Schwimmer (12, 112, 212) entlang der Länge der Hülse (4, 104, 204) bewegt, angeordnet ist;
d) der Prozessor (42, 86, 142) zur Berechnung von Änderungen des Flüssigkeitsfüllstands innerhalb der Hülse (4, 104, 204) aus den erfassten Graduierungen (10, 11, 110) angeordnet ist.

2. Flüssigkeitsstandmessvorrichtung (1) nach Anspruch 1, bei der der Schwimmer (12) zylindrisch ist.

3. Flüssigkeitsstandmessvorrichtung (1) nach Anspruch 2, bei der die Hülse (4) eine zylindrische Innenfläche (7) aufweist, die mit dem Schwimmer (12) konzentrisch ist.

4. Flüssigkeitsstandmessvorrichtung (1, 101, 201) nach einem der vorhergehenden Ansprüche, bei der die Hülse (4, 104, 204) zu einem Ende hin einen Anschlag (62) aufweist, um zu verhindern, dass der Schwimmer (12, 112, 212) die Hülse (4, 104, 204) verlässt.

5. Flüssigkeitsstandmessvorrichtung (1, 101, 201) nach einem der vorhergehenden Ansprüche, bei der die Hülse (4, 104, 204) röhrenförmig ist.

6. Flüssigkeitsstandmessvorrichtung (1, 101) nach einem der vorhergehenden Ansprüche, bei der die Graduierungen Schlitze (10, 11, 110) durch die Hülse (4, 104) sind, die quer zur Bewegungsrichtung des Schwimmers (12, 112) innerhalb der Hülse (4, 104) verlaufen.

7. Flüssigkeitsstandmessvorrichtung (1) nach einem der vorhergehenden Ansprüche, bei der sich die Hülse (4) entlang einer Achse (16) erstreckt und sich der Schwimmer (12), wenn er sich in der Hülse (4) befindet, frei um die Achse (16) drehen kann, wobei der Schwimmer (12) mehrere optische Sensoren (26, 27, 28; 26', 27', 28') aufweist, die um die Achse beabstandet sind, wobei der Winkelabstand zwischen den beabstandeten Sensoren (26, 27, 28, 26', 27', 28') und die Erstreckung jeder Graduierung (10, 11) um die Achse (16) derart ist, dass mindestens einer der optischen Sensoren jede der Graduierungen (10, 11) erfassen kann, wenn sich der Schwimmer (12) entlang der Hülse (4) bewegt.

8. Flüssigkeitsstandmessvorrichtung (1) nach Anspruch 7, bei der entlang der Länge der Hülse (4) beabstandete benachbarte Graduierungen (10, 11) bezüglich einander um die Hülsenachse (16) herum gedreht sind.

9. Flüssigkeitsstandmessvorrichtung (1, 201) nach Anspruch 8, bei der ein Paar optischer Sensoren (26, 27, 28, 126, 26' 27', 28', 126') auf einander gegenüberliegenden Seiten der Schwimmerachse (16, 216) vorhanden ist und benachbarte Graduierungen (10, 11) bezüglich einander um 180° gedreht sind.

10. Flüssigkeitsstandmessvorrichtung (1) nach Anspruch 9, bei der die Hülse (4) eine zylindrische Wand (6) aufweist und sich jede der Graduierungen (10, 11) über einen sich um mindestens 180° erstreckenden Wandbogen erstreckt.

11. Flüssigkeitsstandmessvorrichtung (101, 201) nach einem der Ansprüche 1 bis 6, bei der sich die Hülse (104, 204) entlang einer Achse (116, 216) erstreckt und einen nichtkreisförmigen Innendurchmesser aufweist, wobei die Passung zwischen dem Schwimmer (112, 212) und der Hülse (104, 204) derart ist, dass sich der Schwimmer (112, 212) nicht frei um die Achse (116, 216) drehen kann, wenn er sich in der Hülse (104, 204) befindet.

12. Flüssigkeitsstandmessvorrichtung (101, 201) nach Anspruch 11, bei der die Hülse (104, 204) mehrere Seiten (96 - 99; 196 - 199) um die Achse (116, 216) aufweist und die Graduierungen (110) entlang der Länge mindestens einer der Seiten (96; 196, 199) vorgesehen sind.

13. Flüssigkeitsstandmessvorrichtung (101, 201) nach Anspruch 12, bei der die Hülse (104, 204) im Querschnitt durch die Achse (116, 216) quadratisch oder rechteckig ist.

14. Flüssigkeitsstandmessvorrichtung (101, 201) nach einem der Ansprüche 11 bis 13, bei der der Schwimmer (112, 212) mehrere Seiten (96 - 99, 196 - 199) um die Achse (116, 216) herum auf weist und mindestens einer der optischen Sensoren (126, 226, 226') auf mindestens einer (96, 196, 199) der Seiten vorgesehen ist.

15. Flüssigkeitsstandmessvorrichtung (201) nach Anspruch 14, bei der der Schwimmer (212) mindestens einen der optischen Sensoren (226, 226') auf einander gegenüberliegenden Seiten (196, 199) des Schwimmers (212) aufweist.

16. Flüssigkeitsstandmessvorrichtung (1, 101, 201) nach einem der vorhergehenden Ansprüche, bei der der oder jeder optische Sensor mindestens zwei optische Erfassungsvorrichtungen (26, 27, 28, 26', 27', 28', 126, 127, 226, 226') aufweist, die in Längsrichtung entlang dem Schwimmer (12, 112, 212) beabstandet sind, wobei jede der Erfassungsvorrichtungen das Vorhandensein der Graduierungen (10, 11, 110) erfassen kann, so dass der Prozessor (42, 86, 142) aus den erfassten Graduierungen (10, 11, 110) die Bewegungsrichtung des Schwimmers (12, 112, 212) bezüglich der Graduierungen (10, 11, 110) berechnen kann.

17. Flüssigkeitsstandmessvorrichtung (1, 101, 201) nach Anspruch 16, bei der die optischen Erfassungsvorrichtungen (26, 27, 28, 26', 27', 28', 126, 127, 226, 226') in einer Reihe angeordnet sind, die sich in einer Ebene erstreckt, entlang der sich die Hülse (4, 104, 204) erstreckt.

18. Flüssigkeitsstandmessvorrichtung (1, 101, 201) nach einem der vorhergehenden Ansprüche, bei der die Batterie (22, 122) in einem unteren Teil des Schwimmers (12, 112, 212) und der oder jeder optische Sensor in einem oberen Teil des Schwimmers (12, 112, 212) angeordnet ist.

19. Flüssigkeitsstandmessvorrichtung (1, 101, 201) nach einem der vorhergehenden Ansprüche mit einer Basisstation mit einem Funkempfänger, wobei der Schwimmer (12, 112, 212) einen Funksender aufweist, der mit dem Empfänger in Funkverbindung steht, so dass Flüssigkeitsstanddaten von dem Schwimmer (12, 112, 212) zur Basisstation übertragen werden.

20. Flüssigkeitsstandmessvorrichtung (1, 101, 201) nach einem der vorhergehenden Ansprüche, bei der der Prozessor (42, 142) in dem Schwimmer (12, 112, 212) untergebracht ist.

21. Flüssigkeitsstandmessvorrichtung (101, 201) nach einem der vorhergehenden Ansprüche, bei der der Schwimmer (112, 212) einen Kippschalter (81) enthält, der elektrische Energie von der Batterie (82) zwischen ein und aus schaltet, wenn der Schwimmer (112, 212) invertiert wird.

22. Flüssigkeitsstandmesssystem mit einer Flüssigkeitsmenge (14) und einer Flüssigkeitsstandmessvorrichtung (1, 101, 201), wobei die Flüssigkeitsstandmessvorrichtung (1, 101, 201) einem der vorhergehenden Ansprüche entspricht und zur Messung von Änderungen des Flüssigkeitsstands (13) der Flüssigkeitsmenge (14) angeordnet ist.

23. Flüssigkeitsstandmesssystem nach Anspruch 22, bei dem sich die Flüssigkeitsmenge (14) in einem Bohrloch (2) befindet.

24. Flüssigkeitsstandmesssystem nach Anspruch 22 oder 23, bei dem die Hülse (4, 104, 204) zwischen 10 m und 250 m lang ist.

25. Verfahren zur Messung eines Flüssigkeitsstands (13) in einem Flüssigkeit enthaltenden Behälter (2) unter Verwendung einer Flüssigkeitsstandmesssvorrichtung (1, 101, 201), wobei die Flüssigkeitsstandmessvorrichtung (1, 101, 201) einem der Ansprüche 1 bis 21 entspricht, wobei das Verfahren die folgenden Schritte umfasst:
i) Verwendung eines oder mehrerer der optischen Sensoren (26, 27, 28, 26', 27', 28', 126, 127, 226, 226') zur Erfassung der Relativbewegung des Schwimmers (12, 112, 212) bezüglich der Graduierungen (10, 11, 110), wenn sich der Flüssigkeitsstand (13) ändert; und
ii) Verwendung des Prozessors (42, 86, 142) zur Berechnung eines entsprechenden Flüssigkeitsstands (13') in der Hülse (4, 104, 204) aus der erfassten Bewegung von Graduierungen (10, 11, 110).

26. Verfahren nach Anspruch 25, bei dem der Prozessor (42, 86, 142) die Änderung des Flüssigkeitsstands (13) bezüglich eines anfänglich bekannten Flüssigkeitsstands berechnet.

## Revendications

1. Dispositif de mesure de niveau de liquide (1, 101, 201), comprenant un manchon allongé (4, 104, 204), un flotteur (12, 112, 212), une batterie électrique (22, 122) à l'intérieur du flotteur (12, 112, 212), un processeur (42, 86, 142) pour calculer un niveau de liquide (13), le flotteur (12, 112, 212) étant agencé pour flotter librement à l'intérieur et pour se déplacer le long de la longueur du manchon (4, 104, 204) sous l'influence d'un niveau de liquide changeant (13') à l'intérieur du manchon (4, 104, 204) et le flotteur (12, 112, 212) ayant au moins un capteur sans contact (26, 27, 28, 26', 27', 28', 126, 127, 226, 226') alimenté par la batterie (22, 122) et en communication avec le processeur (42, 86, 142), dans lequel :
a) le manchon (4, 104, 204) s'étend autour du flotteur (12, 112, 212) ;
b) le manchon (4, 104, 204) a, espacée le long de sa longueur, une pluralité de graduations (10, 11, 110) qui sont visibles optiquement à partir de l'intérieur du manchon (4, 104, 204) ;
c) le ou chaque capteur sans contact est un capteur optique (26, 27, 29, 26', 27', 28', 126, 127, 226, 226') agencé pour capter les graduations visibles optiquement (10, 11, 110) lorsque le flotteur (12, 112, 212) se déplace le long de la longueur du manchon (4, 104, 204) ;
d) le processeur (42, 86, 142) est agencé pour calculer à partir des graduations captées (10, 11, 110) des changements du niveau du liquide à l'intérieur du manchon (4, 104, 204).

2. Dispositif de mesure de niveau de liquide (1) selon la revendication 1, dans lequel le flotteur (12) est cylindrique.

3. Dispositif de mesure de niveau de liquide (1) selon la revendication 2, dans lequel le manchon (4) a une surface intérieure cylindrique (7) qui est concentrique avec le flotteur (12).

4. Dispositif de mesure de niveau de liquide (1, 101, 201) selon l'une quelconque des revendications précédentes, dans lequel le manchon (4, 104, 204) a, vers une extrémité, une butée (62) pour empêcher le flotteur (12, 112, 212) de sortir du manchon (4, 104, 204).

5. Dispositif de mesure de niveau de liquide (1, 101, 201) selon l'une quelconque des revendications précédentes, dans lequel le manchon (4, 104, 204) est tubulaire.

6. Dispositif de mesure de niveau de liquide (1, 101) selon l'une quelconque des revendications précédentes, dans lequel les graduations sont des fentes (10, 11, 110) à travers le manchon (4, 104) qui s'étendent transversalement par rapport à la direction de mouvement du flotteur (12, 112) à l'intérieur du manchon (4, 104).

7. Dispositif de mesure de niveau de liquide (1) selon l'une quelconque des revendications précédentes, dans lequel le manchon (4) s'étend le long d'un axe (16), et le flotteur (12) lorsqu'il est dans le manchon (4) est libre de tourner autour de l'axe (16), dans lequel le flotteur (12) a une pluralité de capteurs optiques (26, 27, 28 ; 26', 27', 28') espacés les uns des autres autour de l'axe, la séparation angulaire entre les capteurs espacés les uns des autres (26, 27, 28 ; 26', 27', 28') et l'étendue de chaque graduation (10, 11) autour de l'axe (16) étant telles qu'au moins un des capteurs optiques est capable de capter chacune des graduations (10, 11) lorsque le flotteur (12) se déplace le long du manchon (4).

8. Dispositif de mesure de niveau de liquide (1) selon la revendication 7, dans lequel des graduations voisines (10, 11) espacées le long de la longueur du manchon (4) sont tournées les unes par rapport aux autres autour de l'axe de manchon (16).

9. Dispositif de mesure de niveau de liquide (1, 201) selon la revendication 8, dans lequel il y a une paire de capteurs optiques (26, 27, 28, 126 ; 26', 27', 28', 126') sur des côtés opposés de l'axe de flotteur (16, 216), et les graduations voisines (10, 11) sont tournées de 180° les unes par rapport aux autres.

10. Dispositif de mesure de niveau de liquide (1) selon la revendication 9, dans lequel le manchon (4) a une paroi cylindrique (6), et chacune des graduations (10, 11) s'étend à travers un arc de la paroi s'étendant sur au moins 180°.

11. Dispositif de mesure de niveau de liquide (101, 201) selon l'une quelconque des revendications 1 à 6, dans lequel le manchon (104, 204) s'étend le long d'un axe (116, 216) et a un diamètre intérieur non circulaire, l'ajustement entre le flotteur (112, 212) et le manchon (104, 204) étant tel que le flotteur (112, 212) lorsqu'il est dans le manchon (104, 204) n'est pas libre de tourner autour de l'axe (116, 216).

12. Dispositif de mesure de niveau de liquide (101, 201) selon la revendication 11, dans lequel le manchon (104, 204) a une pluralité de côtés (96 à 99 ; 196 à 199) autour de l'axe (116, 216), et les graduations (110) sont fournies le long de la longueur d'au moins un desdits côtés (96 ; 196, 199).

13. Dispositif de mesure de niveau de liquide (101, 201) selon la revendication 12, dans lequel le manchon (104, 204) a une section transversale carrée ou rectangulaire à travers l'axe (116, 216).

14. Dispositif de mesure de niveau de liquide (101, 201) selon l'une quelconque des revendications 11 à 13, dans lequel le flotteur (112, 212) a une pluralité de côtés (96 à 99, 196 à 199) autour de l'axe (116, 216), et au moins un des capteurs optiques (126, 226, 226') est fourni sur au moins un (96, 196, 199) desdits côtés.

15. Dispositif de mesure de niveau de liquide (201) selon la revendication 14, dans lequel le flotteur (212) a au moins un des capteurs optiques (226, 226') sur des côtés opposés (196, 199) du flotteur (212).

16. Dispositif de mesure de niveau de liquide (1, 101, 201) selon l'une quelconque des revendications précédentes, dans lequel le ou chaque capteur optique comprend au moins deux dispositifs capteurs optiques (26, 27, 29, 26', 27', 28', 126, 127, 226, 226') espacés longitudinalement le long du flotteur (12, 112, 212), chacun des dispositifs capteurs étant capable de capter la présence des graduations (10, 11, 110) de sorte que le processeur (42, 86, 142) peut calculer à partir des graduations captées (10, 11, 110) la direction de mouvement du flotteur (12, 112, 212) par rapport aux graduations (10, 11, 110).

17. Dispositif de mesure de niveau de liquide (1, 101, 201) selon la revendication 16, dans lequel les dispositifs capteurs optiques (26, 27, 28, 26', 27', 28', 126, 127, 226, 226') sont agencés dans un rang, le rang s'étendant dans un plan le long duquel s'étend le manchon (4, 104, 204).

18. Dispositif de mesure de niveau de liquide (1, 101, 201) selon l'une quelconque des revendications précédentes, dans lequel la batterie (22, 122) est positionnée dans une partie inférieure du flotteur (12, 112, 212), et le ou chaque capteur optique est positionné dans une partie supérieure du flotteur (12, 112, 212).

19. Dispositif de mesure de niveau de liquide (1, 101, 201) selon l'une quelconque des revendications précédentes, comprenant une station de base avec un récepteur radio, le flotteur (12, 112, 212) ayant un transmetteur radio en communication radio avec le récepteur de sorte que des données de niveau de liquide sont communiquées à partir du flotteur (12, 112, 212) à la station de base.

20. Dispositif de mesure de niveau de liquide (1, 101, 201) selon l'une quelconque des revendications précédentes, dans lequel le processeur (42, 142) est logé à l'intérieur du flotteur (12, 112, 212).

21. Dispositif de mesure de niveau de liquide (101, 201) selon l'une quelconque des revendications précédentes, dans lequel le flotteur (112, 212) comprend un commutateur à retournement (81) qui commute l'énergie électrique provenant de la batterie (82) entre marche et arrêt lorsque le flotteur (112, 212) est retourné.

22. Système de mesure de niveau de liquide, comprenant un corps de liquide (14) et un dispositif de mesure de liquide (1, 101, 201), dans lequel le dispositif de mesure de liquide (1, 101, 201) est selon l'une quelconque des revendications précédentes, et est agencé pour mesurer des changements du niveau (13) du corps de liquide (14).

23. Système de mesure de niveau de liquide selon la revendication 22, dans lequel le corps de liquide (14) est dans un forage (2).

24. Système de mesure de niveau de liquide selon la revendication 23 ou la revendication 23, dans lequel le manchon (4, 104, 204) fait entre 10 m et 250 m de longueur.

25. Procédé de mesure d'un niveau de liquide (13) dans un récipient (2) contenant un liquide à l'aide d'un dispositif de mesure de niveau de liquide (1, 101, 201), le dispositif de mesure de niveau de liquide (1, 101, 201) étant selon l'une quelconque des revendications 1 à 21, dans lequel le procédé comprend les étapes :
i) utiliser un ou plusieurs parmi les capteurs optiques (26, 27, 28, 26', 27', 28', 126, 127, 226, 226') pour capter le mouvement relatif du flotteur (12, 112, 212) par rapport aux graduations (10, 11, 110) lorsque le niveau de liquide (13) change ; et
ii) utiliser le processeur (42, 86, 142) pour calculer à partir du mouvement capté des graduations (10, 11, 110) un changement correspondant du niveau de liquide (13') dans le manchon (4, 104, 204).

26. Procédé selon la revendication 25, dans lequel le processeur (42, 86, 142) calcule le changement du niveau de liquide (13) par rapport à un niveau de liquide connu initial (13).
